# EUROPEAN PATENT SPECIFICATION

(11) **EP 0 507 252 B1**
(45) Date of publication and mention of the grant of the patent: **02.12.1998**
(21) Application number: 92105542.2
(22) Date of filing: 31.03.1992
(51) Int. Cl.: H04N 5/92, H04N 9/87, G11B 27/30, G11B 27/10

(54) **Apparatus for recording and/or reproducing an information signal, a PCM signal and a video signal in a helical track on a record medium**
Einrichtung zur Aufnahme und/oder Wiedergabe eines Informationssignals, eines PCM-Signals und eines Videosignals in einer Schrägspur auf einem Aufzeichnungsträger
Dispositif pour enregistrer et/ou reproduire un signal d'information, un signal MIC et un signal vidéo dans une piste hélicoidale sur un milieu d'enregistrement

(30) Priority: 31.03.1991 JP 93389/91
(43) Date of publication of application: 07.10.1992
(73) Proprietor: SONY CORPORATION, Tokyo (JP)
(72) Inventor: Ogawa, Kazuyuki, c/o Sony Corporation, Shinagawa-ku, Tokyo (JP); Yamazaki, Hiroshi, c/o Sony Corporation, Shinagawa-ku, Tokyo (JP); Ohkubo, Hirotsugu, c/o Sony Corporation, Shinagawa-ku, Tokyo (JP)
(74) Representative: Melzer, Wolfgang, Dipl.-Ing.

(56) References cited:
- EP-A- 0 208 536
- EP-A- 0 266 174
- EP-A- 0 287 376
- FR-A- 2 631 767
- GB-A- 2 124 056
- US-A- 4 656 536
- PATENT ABSTRACTS OF JAPAN vol. 14, no. 296 (P-1067)26 June 1990 & JP-A-02 091 876 (CANON INC.) 30 March 1990
- PATENT ABSTRACTS OF JAPAN vol. 10, no. 101 (P-447)(2158) 17 April 1986 & JP-A-60 231 979 (SONY K.K.) 18 November 1985
- PATENT ABSTRACTS OF JAPAN vol. 14, no. 070 (E-0866)8 February 1990 & JP-A-01 288 183 (NEC CORP.) 20 November 1989
- PATENT ABSTRACTS OF JAPAN vol. 9, no. 329 (P-416)(2052) 24 December 1985 & JP-A-60 154 385 (SANYO DENKI K.K.) 14 August 1985

## Description

### BACKGROUND OF THE INVENTION

The present invention generally relates to signal recording and/or reproducing apparatus, such as video tape recorders (VTR's) and the like which form helical recording tracks in sequence on a magnetic tape for recording a video signal, a PCM (pulse code modulation) signal and an information signal.

U.S. Patent No. US-A-4,551,771, assigned to the assignee of the present application, describes a helical scan video tape recorder in which PCM audio signals are recorded in first portions of sequentially arranged helical tracks which also record color under video signals in second portions thereof longitudinally displaced from the first portions. Alternate ones of the tracks are sequentially scanned by respective ones of a pair of magnetic recording heads mounted at diametrically opposed positions on a rotating drum. In order to form the predetermined first and second portions of each track, each head is provided with the PCM audio signal and the video signal in time multiplexed fashion. The tape is wound about 210 degrees of the drum's circumference so that each of the heads is operative to scan the tape during the corresponding 210 degrees of the drum's rotation. During the first 30 degrees of each scan, each head records the PCM audio signal in the first portion of the track, while during the remaining 180 degrees of the scan the head records a corresponding video signal. This eliminates the need to record audio signals in a separate longitudinal track with the use of a fixed recording head.

U.S. Patent No. US-A-5,016,120, assigned to the assignee of the present application, describes apparatus for recording a plurality of different PCM audio signal segments on a slant track of a helically scanned tape, as well as an apparatus for recording a PCM audio signal together with a video signal in helically scanned tracks on a tape. An index signal is recorded in an index area of each track provided at a position across a rear back margin and guard area of each PCM audio signal segment and a run-in area of the succeeding segment. This avoids the need to provide a separate longitudinal track for recording an index signal used to detect the beginning of a desired recorded program. The index signal takes the form of a constant frequency modulated to provide an encoded signal.

U.S. Patent No. US-A-4,791,497, also assigned to the assignee of the present application, relates to an apparatus for recording and/or reproducing a video signal and a PCM audio signal together with an index signal in slant tracks on a magnetic tape by means of a rotary head. The index signal may be recorded in a postamble or guard band area following the PCM recording area of the track and is used, for example, to indicate the address of the starting point of a recorded program or event. In certain embodiments, the index signal is comprised of a signal indicative of a starting point of a recorded event or program in a channel, the channel number, or hour, minute and second data.

VTR's incorporating the teachings of the foregoing patents have been provided heretofore integrated with an image pickup apparatus in a miniaturized enclosure which is readily portable. Such VTR's are provided with the capability of recording the time and date of image recording in the form of alphanumeric characters superimposed on the recorded image. However, since the time and date information thus become a permanent part of the recorded image signal, such information must always be displayed along with the image.

Since the apparatus is miniaturized, it provides a convenient means of producing a video record of a vacation or the like. Accordingly, the user may record several days of video and sound information on a single magnetic tape, for example, a tape having a two hour recording capability. It is also possible that recordings may be made on a single tape at various times throughout the year, and even during different years. It will be appreciated, therefore, that the user may wish subsequently to access the information recorded on a desired date for viewing. However, in the conventional apparatus, the user must then carry out the search by actually viewing the date information permanently recorded as a part of the video signal on the tape.

Document EP-A-0 287 376 discloses an apparatus for reproducing an information signal, a video signal and a PCM audio signal according to the preamble of claim 1. According to this document, information data are recorded between a modulated PCM audio recording area and a video signal recording area. These information data may comprise a time code indicating the time of recording of the audio signal and the video signal. A comparing circuit uses these information data to find the starting point of a recorded program or event.

From Patent Abstracts of Japan, vol. 14, no. 70, (E-886) & JP-A-1 288 183, it is known to input time information via a keyboard and record the time information together with video information on a magnetic tape. In case of reproducing the magnetic tape, the time information is displayed together with the video information on a display section.

Document GB-A-124 056 proposes an apparatus for reproducing an information signal, a video signal and an audio signal, wherein a character generating and inserting circuit generates desired character information, such as the date of recording, and inserts the same in video signals before recording the video signals on a recording medium.

Document EP-A-0 266 174 discloses an apparatus for magnetically recording and/or reproducing an information signal on a recording medium, wherein also code signals are recorded on the recording medium. The code signals represent the start point and the end point of index data which are also recorded on the recording medium. In the reproducing mode, the start code and the end code are used for reading the index data.

Finally, document US-A-4,656,536 generally describes a recording apparatus for recording an information signal on a recording tape, wherein the recording tape comprises a plurality of parallel tracks which are each divided into a series of sectors. A digital signal having a series of identification words is recorded on the recording tape so that groups of words are interleaved with the information signal at spaced intervals within each of a series of sectors defined along each track. The word groups may include data bits identifying distinct, but mutually closely related items of information and discrimination bits which identify the data bits.

### OBJECTS AND SUMMARY OF THE INVENTION

Accordingly, it is an object of this invention to provide an apparatus for recording and/or reproducing an information signal, a video signal and a PCM signal recorded by a rotary head in a helical track on a magnetic tape which avoids the abovementioned shortcomings associated with the prior art.

It is a further object of this invention to provide such an apparatus in which a recording may be searched by reproducing an information signal recorded in a helical recording track without adversely affecting other signals recorded therein, such as by superposition thereon or otherwise.

Another object of the present invention is to provide the ability to selectively superimpose information including a date of recording on a video signal reproduced from a helical track on a magnetic tape.

A further object of the present invention is to provide a signal recording and/or reproducing apparatus in which a video signal recorded on a desired date may be accessed in a convenient fashion utilizing only the date information.

According to the present invention, the above objects are achieved by an apparatus as defined in claim 1. The dependent claims define advantageous and preferred modifications of the present invention.

The above, and other objects, features and advantages of the invention, will be apparent in the following detailed description of certain illustrative embodiments thereof which is to be read in connection with the accompanying drawings forming a part hereof, and wherein corresponding parts and components are identified by the same reference numerals in the several views of the drawings.

### BRIEF DESCRIPTION OF THE DRAWINGS

Fig. 1 is a block diagram of a VTR according to one embodiment of the present invention;
Figs. 2A through 2E illustrate a format for recording a marker signal together with a PCM signal and a video signal in a helical track on a magnetic tape with the use of the embodiment of Fig. 1;
Fig. 3 is a chart summarizing a distribution of different types of information signals included in the marker signal of Figs. 2A-2E in sequentially arranged recording tracks;
Fig. 4 is a schematic diagram, corresponding with the chart of Fig. 3, illustrating the distribution of the different types of information signals in the sequentially arranged recording tracks;
Figs. 5 and 6 are schematic diagrams for use in illustrating certain advantages provided by the information distribution format of Fig. 4 for reproducing the information signals in a frame by frame-forwarding mode and in a two-times speed reproducing mode;
Fig. 7 is a diagrammatic view of a rotary recording head assembly of the Fig. 1 embodiment;
Fig. 8 is a schematic representation of sequentially arranged helical recording tracks formed in a magnetic tape by the head drum of Fig. 7;
Fig. 9 is a flow chart illustrating a search processing routine of the Fig. 1 embodiment; and
Fig. 10 is a flow chart illustrating a search operation subroutine of the Fig. 9 search processing routine.

### DETAILED DESCRIPTION OF A PREFERRED EMBODIMENT

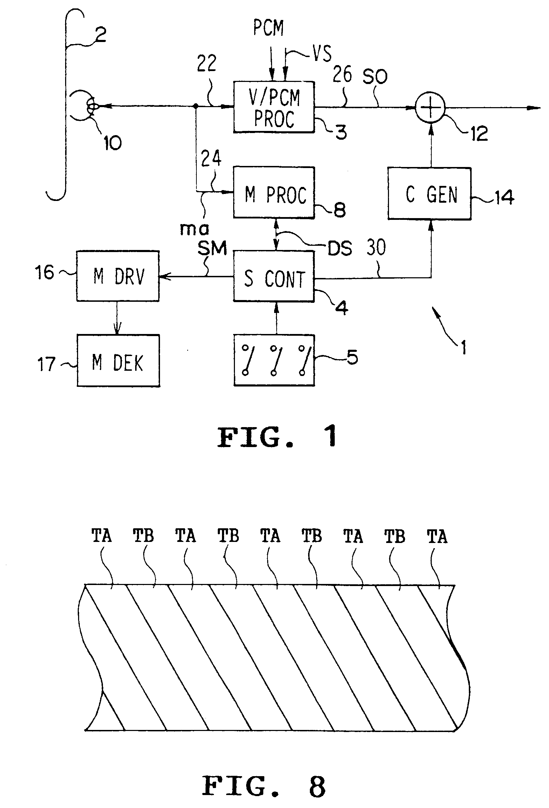

Referring to the drawings in detail, and presently to Fig. 1 thereof, a VTR 1 includes a rotary magnetic recording/reproducing head assembly 10 for recording or reproducing signals in helical recording tracks formed obliquely in sequence on a magnetic tape 2. A video signal/PCM audio signal processing circuit 3 has a first input for receiving a video signal VS and a second input for receiving a PCM audio signal PCM and is operative to convert the signals VS and PCM into respective recording signals for recording on the tape 2 in respective portions of each of the helical recording tracks. For this purpose, the circuit 3 includes suitable switching circuitry for outputting the signals VS and PCM in time divisional fashion via an output terminal 22 coupled with the head assembly 10.

A marker processing circuit M PROC 8 is operative to generate a marker signal ma which is provided via an output terminal 24 thereof to the head assembly 10 for recording in a portion of each of the helical tracks of the tape 2 other than the portions thereof in which the signals VS and PCM are recorded and, for this purpose, incorporates suitable switching circuitry for outputting the marker signal ma in time divisional fashion with the video signal VS and the PCM audio signal for recording by the head assembly 10.

The marker signal ma is produced by the marker processing circuit 8 by modulating a recording signal with time code information, recording date, and recording time information (collectively, DS in Fig. 1) supplied thereto by a system control circuit S CONT 4. The system control circuit 4 produces the information DS in response to recording date and recording time information input manually by a user through actuation of one or more manual controls forming a part of an operation unit 5 coupled with the circuit 4.

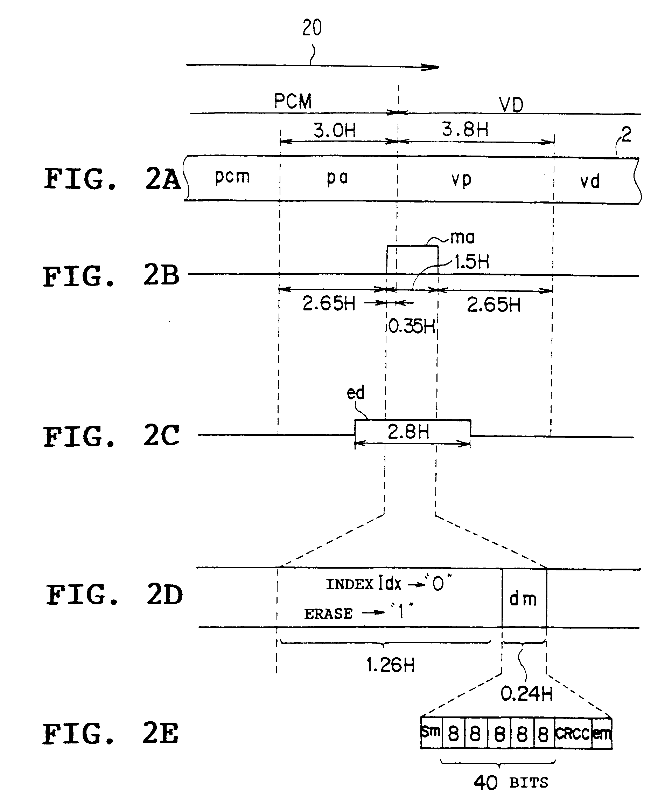

Figs. 2A - 2E illustrate a format for recording the video signal VS, the PCM audio signal and the marker signal ma in different respective areas of each helical track arranged longitudinally along an exemplary one of the recording tracks scanned by the head assembly 10 in the direction indicated by the arrow 20. With reference first to Fig. 2A, an area designated PCM beginning at the longitudinal extremity of the track first scanned by the head assembly 10 is designated for recording the PCM audio signal. After the head assembly 10 has scanned the area PCM, it scans an area designated VD extending from the area PCM to the opposite longitudinal extremity of the track and in which a video signal vd is recorded.

The PCM audio signal is recorded in a portion of the area PCM designated pcm in Fig. 2A which terminates at a position 3.0 horizontal intervals [H] from the boundary between the areas PCM and VD. The video signal vd is recorded in a portion vd of the video signal recording area VD commencing 3.8 [H] from the boundary between the areas PCM and VD, so that a predetermined guard band area is defined between the PCM audio signal recording area pcm and the area vd in which the video signal is recorded.

Referring now to Fig. 2B, the marker signal ma is recorded by the marker processing circuit 8 during a period 1.5 [H] commencing 2.65 [H] from the terminus of the track area pcm in which the PCM audio signal is recorded. Accordingly, the marker signal is recorded in an interval commencing 0.35 [H] before the boundary of the areas PCM and VD and terminating 2.65 H before the beginning of the area vd in which the video signal is recorded. With reference also to Fig. 2C, it will be seen that the marker signal ma may be conveniently extracted from the signal reproduced by the head assembly 10 with the use of a window signal ed having a duration of 2.8 [H] which has a rising edge preceding the marker signal ma and a falling edge following that of the marker signal, thus to provide an appropriate time window for recovering the marker signal ma.

Turning now to Fig. 2D, a format for the marker signal ma is illustrated therein. A first portion of the marker signal extending 1.26 [H] from the beginning thereof along the scanning direction 20 of the head assembly 10 is assigned for the recording of a header portion, in which information such as an Index signal Idx for a respective program (the beginning of which is represented by a "0" value of the index signal) or an erase signal is recorded. The remainder of the marker signal recording area extending for 0.24 [H] is assigned for the recording of a recording date, a recording time or a time code, depending upon the particular track in which the marker signal is recorded. Referring also to Fig. 2E, this portion of the marker signal, designated dm, includes a code start marker sm at the beginning thereof and a code end marker em at the terminus thereof. Between the start and end markers sm and em, five bytes of data are recorded, followed by a CRCC error correction code.

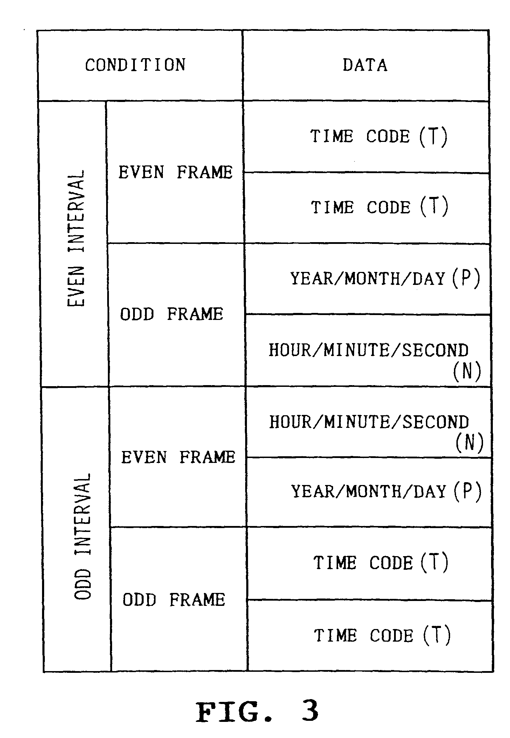

The chart of Fig. 3 illustrates the distribution of the time code, recording date and recording time data included in the marker signal ma in the various sequentially recorded helical tracks on the magnetic tape 2. As illustrated in Fig. 3, the time code data is recorded in the eight bytes of the portion dm of the marker signal ma in both fields of each even frame during each even interval of four sequential tracks on the tape 2, as well as in both fields of each odd frame during each odd interval of four tracks on the tape 2. The time code data includes an identification signal, together with hour, minute, second and frame signals.

However, during the first field of each odd frame during each even interval, as well as in the second field of each even frame during each odd interval, information indicating the date of recording is recorded in the five bytes of data included within the portion dm of the marker signal ma. The date of recording information includes an appropriate identification signal, together with year, month, day and time information.

Moreover, in the second field of each odd frame during each even interval, as well as in the first field of each even frame of each odd interval, the five bytes of data included in the portion dm of the marker signal ma indicates the time at which the video information was recorded and includes an appropriate identification signal, together with hour, minute and second information.

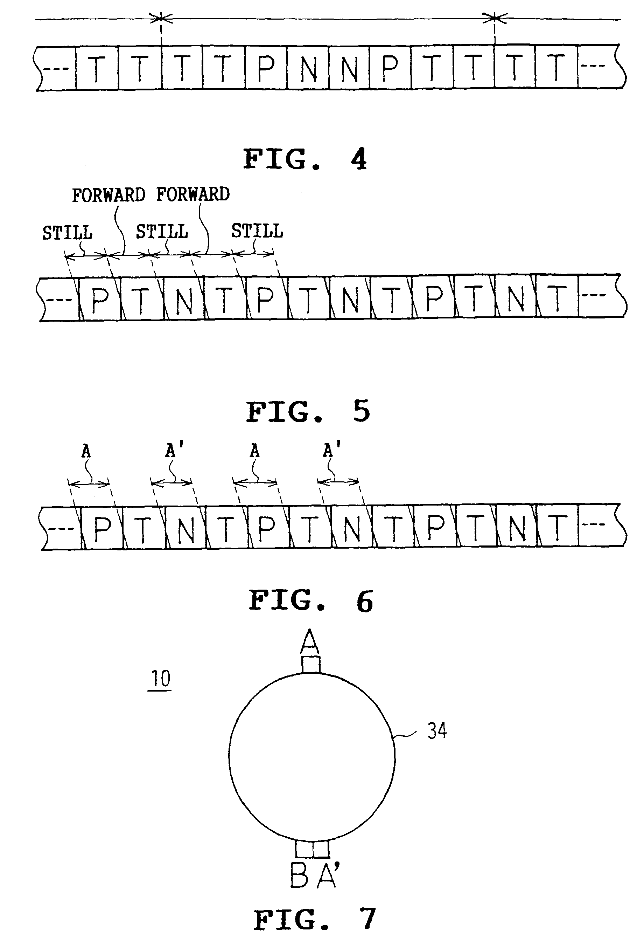

Fig. 4 schematically illustrates the track-by-track arrangement of the time code, date of recording and time of recording data summarized in the chart of Fig. 3. In Fig. 4, tracks in which the marker signal includes time code information are denoted by the symbol "T", tracks recording a marker signal having date of recording information are denoted by the symbol "P" and tracks recording marker signals including time of recording information are denoted by the symbol "N". It will be seen from Fig. 4 that, by virtue of the recording arrangement as illustrated in the chart of Fig. 3, time code information is recorded in intervals of four adjacent tracks separated by four track intervals in which the date of recording is recorded in the first and fourth tracks, while the time of recording is recorded in the second and third tracks.

The recording configuration illustrated in Fig. 4 provides the advantage that each of the time code, date of recording information and time of recording information can be reliably reproduced even when the VTR 1 operates in a frame by frame-forwarding mode or in a two-times speed mode.

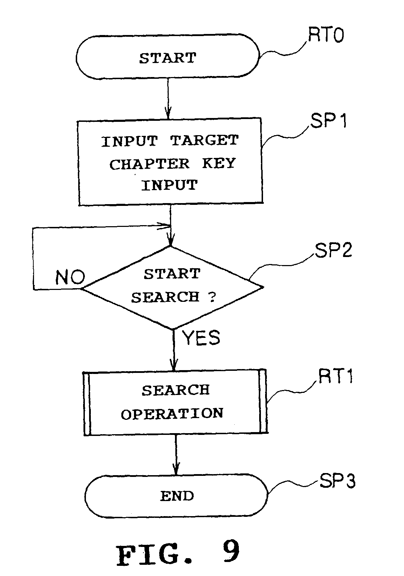

The foregoing advantages are illustrated with reference also to Figs. 5-8. With reference first to Fig. 7, the magnetic head assembly 10 of Fig. 1 is illustrated in greater detail therein. As shown in Fig. 7, the assembly 10 includes a rotary drum 34 which mounts a first magnetic recording head A having a first azimuth angle at a first circumferential position, and a pair of magnetic recording heads B and A' at a circumferential position diametrically opposed to the first position. The head A' has an azimuth angle which is the same as that of head A, while head B has a different azimuth angle. Referring also to Fig. 8, a magnetic tape recorded with the rotary head drum of Fig. 7 is illustrated therein having adjacent recording tracks labeled alternately TA and TB respectively recorded by the heads A and B of the rotary head assembly 10 of Fig. 7. The respective azimuth angles of the heads A and B are selected so that, during reproduction, crosstalk in the reproduced signals produced by each of heads A and B due to the reproduction of signals from adjacent tracks may be minimized.

Figs. 5 and 6 illustrate an arrangement in which the time code signals T are recorded in every other track, while date of recording and time of recording signals P and N are recorded at intervals of every four tracks. If a tape recorded as illustrated in Fig. 5 is reproduced by the rotary head assembly 10 of Fig. 7 in a frame by frame-forwarding mode, as illustrated in Fig. 5, the magnetic heads A and A' having the same azimuth angle are employed, so that the time code data T are not reproduced. However, if a magnetic tape recorded as in Fig. 4 is reproduced in this manner, the time code data T are readily and accurately reproduced since the time code data are recorded in adjacent tracks.

In the two-times speed mode, which is illustrated in Fig. 6, the heads A and A' are utilized to reproduce every other track, so that once again the time code data T are not reproduced. Where a tape recorded in the manner illustrated in Fig. 4 is reproduced in the two-time speed mode, however, since the time code data is recorded in adjacent tracks, the same will be reproduced reliably and accurately.

In the case of the date of recording data P and the time of recording data N recorded in the manner illustrated in Fig. 4, it will be seen that the same likewise will be reliably and accurately reproduced even in the frame by frame-forwarding mode as well as in the two-times speed mode, since the order in which the data P and N are recorded in the first and second fields of the odd frame included in the even interval is reversed in the even frame of the odd interval.

In the reproduction mode of the VTR 1 of Fig. 1, the circuit 3 demodulates the reproduced video signal supplied by the head assembly 10 in order to generate an output video signal SO which is supplied at an output terminal 26 thereof in a form suitable for monitoring by an external monitoring unit. In addition, the marker processing circuit 8 inputs the marker signal ma from each track reproduced by the head assembly 10 utilizing the window signal ed, as illustrated in Fig. 2C, and then demodulates the marker signal ma. The marker processing circuit 8 identifies the time code data, the date of recording information and the time of recording information based upon the identification signals reproduced with the marker signal ma and outputs this information to the system controlling circuit 4 which stores the same for use selectively in response to commands input by a user via the operation unit 5.

Accordingly, in response to appropriate user commands, the system controlling circuit 4 outputs date of recording information, time of recording information, etc., via an output terminal 30 thereof to a character generator C GEN 14 which responds thereto by producing corresponding character signals which it outputs to a first input of an adder 12. The adder 12 has a second input coupled with the output terminal 26 of the circuit 3 to receive the output video signal SO and is operative to superimpose the character signals provided by the character generator 14 on the output video signal SO selectively so that the same may be viewed as part of an image produced with the use of the output video signal SO.

In the alternative, as desired, the user may input an appropriate command with the use of the operation unit 5 so that the circuit 4 inhibits the output of information at its output terminal 30. In the absence of such information, the character generator 14 is inoperative to output character signals to the adder 12. Consequently, the user may also choose to view the output video signals without the date, time or other information superimposed thereon.

Conventional video tape recorders, on the other hand, record date of recording information characters as a part of the image represented by the video signal, so that the date of recording information must be reproduced with the video signal if the same is to be viewed at all. If a user wishes instead not to superimpose date of recording characters on the video signal when making a recording with the use of a conventional video tape recorder, however, no ability is provided to record the date of recording information. In that event, the date of recording cannot be ascertained from the video taped record, so that it is difficult to ascertain the date of recording or to locate the recording of a particular event on the tape.

Accordingly, the video tape recorder of Fig. 1 provides the ability to search a desired recording on the tape by inputting search information, for example, date of recording information in the form of the year, month and day of a recording, or only portions of such information, together with a search command with the use of the operation unit 5. For example, when information indicating a month when a picture was recorded is input by the user, the system controlling circuit 4 supplies an appropriate drive control signal SM to a mechanical driving unit M DRV 16 which responds by driving a mechanical tape deck M DEK 17 in a fast forwarding mode until the reproduced marker signal contains a month of recording corresponding with that specified by the user, whereupon the search operation terminates.

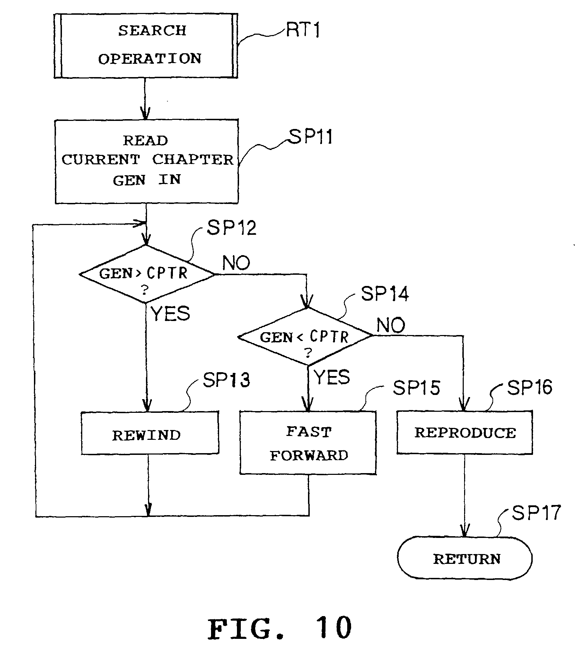

The foregoing search processing routine is explained in greater detail with reference to the flow charts of Figs. 9 and 10. With reference first to Fig. 9, when the VTR 1 enters the search mode, in a step SP1 the system controlling circuit 4 inputs a target chapter "CPTR" representing the search information input by the user by means of the unit 5. The process continues in step SP2 during which the system controlling circuit 4 waits until a search command input signal is received from the operation unit 5 and, once the search command is seen, the system controlling circuit 4 carries out a search operation subroutine RT1 which is illustrated in Fig. 10.

Referring now to Fig. 10, in a step SP11 of the search operation subroutine, the system controlling circuit 4 reads a current chapter "GEN" representing the current position of the tape as reflected by the marker signal. Thereupon, in a step SP12 the system controlling circuit 4 determines whether the current chapter "GEN" is larger than the target chapter "CPTR". If so, the program proceeds to a step SP13 in which an appropriate drive control signal SM is supplied to the mechanical driving unit 16 for rewinding the tape, and then the program returns to the step SP12.

If, however, the circuit 4 determines in the step SP12 that the current chapter "GEN" is less than or equal to the target chapter "CPTR", this indicates that the tape has reached or passed the position indicated by the target chapter "CPTR". Thereupon, the program continues to a step SP14 in which it is determined whether the current chapter "GEN" has become smaller than the target chapter "CPTR". If so, the program continues to a step SP15 in which the system controlling circuit 4 supplies a drive control signal SM to the mechanical driving unit 16 for driving the tape in a fast forward mode and the program returns to the step SP12. If, however, it is determined in the step SP14 that the current chapter "GEN" is not less than the target chapter "CPTR", this indicates that the current chapter "GEN" now is equal to the target chapter "CPTR". Thereupon, the program continues to a step SP16 in which the system controlling circuit 4 places the VTR 1 in a reproducing mode and terminates the search operation subroutine, so that the overall search operation is terminated in a step SP3 of Fig. 9. Accordingly, thereupon the VTR 1 proceeds to reproduce the signals located at the position accessed by means of the month of recording data input by the user.

Similarly, where the user inputs information indicating a day on which a desired recording was made, the system controlling circuit 4 monitors the reproduced data indicating the year, month and day of recording while the tape is transported in the fast forward mode, as described above, and when the day specified by the user is detected in the monitored data, the VTR1 switches to the reproducing mode. In this manner, the system controlling circuit 4 searches and once found, reproduces the signals recorded on the day specified by the user.

In addition, when the user inputs data for searching a recording based upon a month, day and hour of recording, the system controlling circuit 4 searches and displays a recording made on the specified month, day and hour.

If, however, a corresponding recording specified by the user cannot be found by searching the magnetic tape 2 through to its end, the system controlling circuit 4 provides a display to that effect by means of the character generator 14, and then ends the searching process.

Accordingly, when a video signal is recorded with the use of the VTR 1, information representing the date and time of recording, as well as other useful information, is recorded separately from the video signal. At the time of reproduction, the content of the tape is searched according to the information input by the user, in a simple and straight forward manner, while enhancing the operational capabilities of the video tape recorder 1.

In the embodiment disclosed hereinabove, time code data, as well as the date and time of recording information, is recorded as a part of the marker signal. However, the present invention is not so limited, and is applicable generally where various types of information are recorded, and a search is carried out with the use of such information.

As described above, according to one feature of the present invention, a predetermined area in a recording track located between a video signal recording area and a PCM recording area thereof, is utilized for recording information useful for searching a recording to be reproduced, in order to provide a magnetic recording and/or reproducing apparatus capable of searching a desired recording in a simple and convenient fashion.

## Claims

1. An apparatus for reproducing an information signal, a video signal and a PCM audio signal recorded by a rotary head (10) in a helical track on a magnetic tape (2), said video signal being recorded in a first portion of said helical track and said PCM audio signal being recorded in a second portion of said helical track other than said first portion, said information signal including a date signal indicating a date on and a time at which said PCM audio signal and said video signal were recorded being recorded in a third portion of said helical track between said first portion and said second portion thereof, comprising:
video playback means (10; A; A') for reproducing said video signal from said helical track (TA); and
information playback means (10; B) for reproducing said information signal from said helical track (TB),
**characterized by**
character generator means (14) for generating character signals in response to the reproduced information signal;
first means (12) for superimposing said character signals on said video signal; and
second means (4, 14) for selectively enabling or disabling the superimposition of said character signals on said video signal by said first means (12) in response to a corresponding user command.

2. The apparatus of claim 1, wherein said information playback means (10; B) is operative to play back a plurality of information signal types, each of said information signal types being recorded in a respective one of a plurality of helical tracks on said magnetic tape (2), each of said information signals including a header signal and a respective one of said date signal, a time code signal containing identification and frame information and a recording time signal indicating only a time of day during which the corresponding video signal was recorded.

3. The apparatus of claim 2, wherein said second means (4; 14) is operative in response to said date signal and said recording time signal to selectively control (8) said character generator means (14) to generate character signals representing a date and time, respectively, of the recording of a video signal corresponding to said date signal and said recording time signal.

4. The apparatus of claim 2 or 3, wherein said information playback means (10; B) is operative to play back said information signal based upon start and end marker signals associated therewith.

5. The apparatus of any one of claims 1 to 4, wherein said second means (4) is operative to selectively control the superimposition of said character signals on said video signal by controlling the generation of said character signals by said character generator means (14)

6. The apparatus of claim 5, wherein said first means comprises adding means (12) for adding said character signals to said video signal.

7. The apparatus of any one of claims 1-6, wherein said information signal is recorded in a guard band disposed on said track between said first portion and said second portion.

8. An apparatus according to any one of claims 1 to 7,
**characterized by**
information generator means (8) for generating said information signal;
switch means (3) for supplying said PCM audio signal, said video signal and said information signal time-divisionally to said rotary head (10); and
switch control means (8) for controlling said switch means to supply said information signal to said rotary head (10) so that said rotary head (10) is operative to record said information signal in said third portion of said helical track.

9. The apparatus of claim 8, wherein said switch control means (8) is operative to supply said information signal to said rotary head (10) for recording in a guard band region between said first portion and said second portion of said helical track.

10. The apparatus of claim 8, wherein said switch control means (8) is operative to control said switch means (3) to supply said information signal with a header signal to said rotary head (10) for recording in a first plurality of helical tracks formed on said magnetic tape (2) and is further operative to supply time code signals containing identification and frame information and recording time signals indicating only a time of day of recording with corresponding header signals as further information signals for recording respectively in second and third pluralities of helical tracks formed on said magnetic tape (2).

11. The apparatus of claim 10, wherein said switch control means (8) is operative to record a start marker signal and an end marker signal indicating respective start and end positions of said information signal and said further information signals in each of the first, second and third pluralities of helical tracks.

12. The apparatus of claim 10 or 11, wherein said switch control means (8) is operative to supply said information signal and said further information signals to said rotary head (10) such that said time code signals are recorded in groups of adjacent helical tracks on said magnetic tape (2), each group of adjacent helical tracks being separated by a predetermined number of other helical tracks formed on said magnetic tape (2).

13. The apparatus of claim 8, wherein said switch control means (8) is operative to control said switch means (3) to supply said video signal to said rotary head (10) for recording in a plurality of sequential helical tracks on said magnetic tape (2) and to supply date of recording signals in selected ones of said plurality of sequential helical tracks such that said selected tracks are spaced from one another by intervals of an odd number of tracks.

14. The apparatus of claim 13, wherein said switch control means (8) is operative to control said switch means (3) to supply time of recording and time code signals to said rotary head (10) for recording in respective ones of said plurality of sequential helical tracks other than said selected ones of said plurality of sequential helical tracks.

15. The apparatus of claim 14, wherein said switch control means (8) is operative to control said switch means (3) to supply said time of recording signals to said rotary head (10) such that said time of recording signals are recorded in further selected ones of said plurality of sequential helical tracks such that said further selected tracks are spaced from one another by intervals of an odd number of tracks, two of said selected ones of the tracks recording said date of recording signals being arranged with two of said further selected ones of the tracks recording said time of recording signals in groups of four sequential tracks.

16. The apparatus of claim 15, wherein each group of four sequential tracks is separated from a following group thereof by four tracks recording said time code signals.

17. The apparatus of any one of claims 8 to 16, wherein said switch control means (8) is operative to control said switch means (3) to supply said video signal to said rotary head (10) for recording said video signal in said first portion of said helical track.

## Patentansprüche

1. Vorrichtung zur Wiedergabe eines mit Hilfe eines Drehkopfs (10) in einer Schrägspur auf einem Magnetband (2) aufgezeichneten Informationssignals, Videosignals und PCM-Audiosignals, wobei das Videosignal in einem ersten Abschnitt der Schrägspur und das PCM-Audiosignal in einem von dem ersten Abschnitt abweichenden zweiten Abschnitt der Schrägspur aufgezeichnet ist, wobei das Informationssignal ein Datumsignal enthält, welches ein Datum und eine Zeit der Aufzeichnung des PCM-Audiosignals und des Videosignals bezeichnet, und in einem zwischen dem ersten Abschnitt und dem zweiten Abschnitt befindlichen dritten Abschnitt der Schrägspur aufgezeichnet ist, umfassend:
Videowiedergabemittel (10; A; A') zur Wiedergabe des Videosignals von der Schrägspur (TA), und
Informationswiedergabemittel (10; B) zur Wiedergabe des Informationssignals von der Schrägspur (TB),
gekennzeichnet durch
Zeichengeneratormittel (14) zum Erzeugen von Zeichensignalen in Abhängigkeit von dem wiedergegebenen Informationssignal,
erste Mittel (12) zum Überlagern des Videosignals mit den Zeichensignalen, und
zweite Mittel (4, 14) zur selektiven Aktivierung oder Deaktivierung der Überlagerung des Videosignals mit den Zeichensignalen durch die ersten Mittel (12) in Abhängigkeit von einem entsprechenden Benutzerbefehl.

2. Vorrichtung nach Anspruch 1, wobei die Informationswiedergabemittel (10; B) derart ausgestaltet sind, daß eine Vielzahl von Informationssignaltypen wiedergeben wird, wobei jeder der Informationssignaltypen in einer entsprechenden Schrägspur einer Vielzahl von Schrägspuren auf dem Magnetband (2) aufgezeichnet ist, wobei jedes der Informationssignale ein Kopfsignal und ein entsprechendes Signal des Datumsignals, eines Identifizierungs- und Rahmeninformationen enthaltenden Zeitcodesignals und eines Aufzeichnungszeitsignals, welches lediglich eine Tageszeit der Aufzeichnung des entsprechenden Videosignals bezeichnet, enthält.

3. Vorrichtung nach Anspruch 2, wobei die zweiten Mittel (4; 14) derart ausgestaltet sind, daß in Abhängigkeit von dem Datumsignal und dem Auszeichnungszeitsignal die Zeichengeneratormittel (14) derart selektiv angesteuert (8) werden, daß diese dem Datumsignal und dem Aufzeichnungszeitsignal entsprechende Zeichensignale erzeugen, welche einem Datum bzw. einer Zeit der Aufzeichnung eines Videosignals entsprechen.

4. Vorrichtung nach Anspruch 2 oder 3, wobei die Informationswiedergabemittel (10; B) derart ausgestaltet sind, daß das Informationssignal auf Grundlage von damit verbundenen Anfangs- und Endmarkierungssignalen wiedergeben wird.

5. Vorrichtung nach einem der Ansprüche 1 bis 4, wobei die zweiten Mittel (4) derart ausgestaltet sind, daß durch Steuerung der Erzeugung der Zeichensignale durch die Zeichengeneratormittel (14) selektiv die Überlagerung des Videosignals mit den Zeichensignalen gesteuert wird.

6. Vorrichtung nach Anspruch 5, wobei die ersten Mittel Addiermittel (12) zum Hinzuaddieren der Zeichensignale zu dem Videosignal umfassen.

7. Vorrichtung nach einem der Ansprüche 1 bis 6, wobei das Informationssignal in einem Schutzband aufgezeichnet ist, welches auf der Spur zwischen dem ersten Abschnitt und dem zweiten Abschnitt angeordnet ist.

8. Vorrichtung nach einem der Ansprüche 1 bis 7,
gekennzeichnet durch
Informationsgeneratormittel (8) zur Erzeugung des Informationssignals,
Schaltmittel (3) zum Zuführen des PCM-Audiosignals, des Videosignals und des Informationssignals zu dem Drehkopf (10) gemäß einem Zeitmultiplexverfahren, und
Schaltsteuermittel (8) zum Steuern der Schaltmittel derart, daß das Informationssignal dem Drehkopf (10) zugeführt wird, so daß der Drehkopf (10) das Informationssignal in dem dritten Abschnitt auf der Schrägspur aufzeichnet.

9. Vorrichtung nach Anspruch 8, wobei die Schaltsteuermittel (8) derart ausgestaltet sind, daß das Informationssignal dem Drehkopf (10) zur Aufzeichnung in einem Schutzbandbereich zwischen dem ersten Abschnitt und dem zweiten Abschnitt auf der Schrägspur zugeführt wird.

10. Vorrichtung nach Anspruch 8, wobei die Schaltsteuermittel (8) derart ausgestaltet sind, daß die Schaltmittel (3) derart angesteuert werden, daß das Informationssignal mit einem Kopfsignal dem Drehkopf (10) zur Aufzeichnung in einer ersten Vielzahl von auf dem Magnetband (2) ausgebildeten Schrägspuren zugeführt wird, und wobei die Schaltsteuermittel (8) des weiteren derart ausgestaltet sind, daß Identifizierungs- und Rahmeninformationen enthaltende Zeitcodesignale sowie Aufzeichnungszeitsignale, die lediglich eine Tageszeit einer Aufzeichnung bezeichnen, mit entsprechenden Kopfsignalen als weitere Informationssignale zur Aufzeichnung in entsprechende zweite und dritte Vielzahlen von auf dem Magnetband (2) ausgebildeten Schrägspuren zugeführt werden.

11. Vorrichtung nach Anspruch 10,
wobei die Schaltsteuermittel (8) derart ausgestaltet sind, daß in jeder der ersten, zweiten und dritten Vielzahlen von Schrägspuren ein die Anfangsposition des Informationssignals anzeigendes Anfangsmarkierungssignal und ein die Endposition des Informationssignals anzeigendes Endmarkierungssignal und die weiteren Informationssignale aufgezeichnet werden.

12. Vorrichtung nach Anspruch 10 oder 11, wobei die Schaltsteuermittel (8) derart ausgestaltet sind, daß dem Drehkopf (10) das Informationssignal und die weiteren Informationssignale derart zugeführt werden, daß die Zeitcodesignale in Gruppen von benachbarten Schrägspuren auf dem Magnetband (2) aufgezeichnet werden, wobei die Gruppen von benachbarten Schrägspuren durch eine bestimmte Anzahl von anderen auf dem Magnetband (2) ausgebildeten Schrägspuren getrennt sind.

13. Vorrichtung nach Anspruch 8, wobei die Schaltsteuermittel (8) derart ausgestaltet sind, daß sie die Schaltmittel (3) derart ansteuern, daß dem Drehkopf (10) das Videosignal zur Aufzeichnung in einer Vielzahl von aufeinanderfolgenden Schrägspuren auf dem Magnetband (2) und Aufzeichnungssignale zur Aufzeichnung in ausgewählten Schrägspuren der Vielzahl von aufeinanderfolgenden Schrägspuren derart zugeführt werden, daß die ausgewählten Spuren voneinander durch Intervalle mit einer ungeraden Anzahl von Spuren beabstandet sind.

14. Vorrichtung nach Anspruch 13, wobei die Schaltsteuermittel (8) derart ausgestaltet sind, daß sie die Schaltmittel (3) derart ansteuern, daß dem Drehkopf (10) Aufzeichnungszeit- und Zeitcodesignale zur Aufzeichnung in entsprechenden Schrägspuren der Vielzahl von aufeinanderfolgenden Schrägspuren zugeführt werden, wobei diese von den ausgewählten Schrägspuren der Vielzahl von aufeinanderfolgenden Schrägspuren abweichen.

15. Vorrichtung nach Anspruch 14, wobei die Schaltsteuermittel (8) derart ausgestaltet sind, daß sie die Schaltmittel (3) derart ansteuern, daß dem Drehkopf (10) die Aufzeichnungszeitsignale derart zugeführt werden, daß die Aufzeichnungszeitsignale in weiteren ausgewählten Schrägspuren der Vielzahl von aufeinanderfolgenden Schrägspuren aufgezeichnet werden, wobei die weiteren ausgewählten Spuren voneinander durch Intervalle mit einer ungeraden Anzahl von Spuren beabstandet sind und zwei der ausgewählten Spuren, in denen die Aufzeichnungsdatumssignale aufgezeichnet sind, mit zwei Spuren der weiteren ausgewählten Spuren, in denen die Aufzeichnungszeitsignale aufgezeichnet sind, in Gruppen zu vier aufeinanderfolgenden Spuren angeordnet sind.

16. Vorrichtung nach Anspruch 15, wobei jede vier aufeinanderfolgende Spuren umfassende Gruppe von einer darauffolgenden Gruppe, die vier aufeinanderfolgende Spuren umfaßt, durch vier Spuren, in denen die Zeitcodesignale aufgezeichnet sind, getrennt ist.

17. Vorrichtung nach einem der Ansprüche 8 bis 16, wobei die Schaltsteuermittel (8) derart ausgestaltet sind, daß sie die Schaltmittel (3) derart ansteuern, daß dem Drehkopf (10) das Videosignal zur Aufzeichnung des Videosignals in dem ersten Abschnitt der Schrägspur zugeführt wird.

## Revendications

1. Appareil pour reproduire un signal d'informations, un signal vidéo et un signal audio PCM enregistrés par une tête rotative (10) sur une piste hélicoïdale sur une bande magnétique (2), ledit signal vidéo étant enregistré dans une première partie de ladite piste hélicoïdale et ledit signal audio PCM étant enregistré dans une deuxième partie de ladite piste hélicoïdale autre que ladite première partie, ledit signal d'informations, comprenant un signal de date indiquant une date et une heure auxquelles ledit signal audio PCM et ledit signal vidéo ont été enregistrés, étant enregistré dans une troisième partie de ladite piste hélicoïdale entre ladite première partie et ladite deuxième partie de cette dernière, comprenant :
des moyens de reproduction vidéo (10 ; A ; A') pour reproduire ledit signal vidéo en provenance de ladite piste hélicoïdale (TA) ; et
des moyens de reproduction d'informations (10 ; B) pour reproduire ledit signal d'informations en provenance de ladite piste hélicoïdale (TB),
caractérisé par
des moyens formant générateur de caractères (14) pour produire des signaux de caractères en réponse au signal d'informations reproduit ;
des premiers moyens (12) pour superposer lesdits signaux de caractères sur ledit signal vidéo ; et
des seconds moyens (4, 14) pour valider ou invalider, de manière sélective, la superposition desdits signaux de caractères sur ledit signal vidéo par lesdits premiers moyens (12) en réponse à une commande correspondante d'un utilisateur.

2. Appareil selon la revendication 1, dans lequel lesdits moyens de reproduction d'informations (10 ; B) sont opérationnels pour reproduire une pluralité de types de signaux d'informations, chacun desdits types de signaux d'informations étant enregistré sur une piste respective d'une pluralité de pistes hélicoïdales sur ladite bande magnétique (2), chacun desdits signaux d'informations comprenant un signal d'en-tête et un signal respectif dudit signal de date, d'un signal de code temporel contenant des informations d'identification et d'image et d'un signal d'heure d'enregistrement indiquant seulement une heure du jour à laquelle le signal vidéo correspondant a été enregistré.

3. Appareil selon la revendication 2, dans lequel lesdits seconds moyens (4 ; 14) sont opérationnels en réponse audit signal de date et audit signal d'heure d'enregistrement pour commander (8), de manière sélective, lesdits moyens formant générateur de caractères (14) pour produire des signaux de caractères représentant respectivement une date et une heure, de l'enregistrement d'un signal vidéo correspondant audit signal de date et audit signal d'heure d'enregistrement.

4. Appareil selon la revendication 2 ou 3, dans lequel lesdits moyens de reproduction d'informations (10 ; B) sont opérationnels pour reproduire ledit signal d'informations sur la base de signaux de marquage de début et de fin associés à ce dernier.

5. Appareil selon l'une quelconque des revendications 1 à 4, dans lequel lesdits seconds moyens (4) sont opérationnels pour commander, de manière sélective, la superposition desdits signaux de caractères sur ledit signal vidéo en commandant la production desdits signaux de caractère par lesdits moyens formant générateur de caractères (14).

6. Appareil selon la revendication 5, dans lequel lesdits premiers moyens comprennent des moyens d'addition (12) pour ajouter lesdits signaux de caractères audit signal vidéo.

7. Appareil selon l'une quelconque des revendications 1 à 6, dans lequel ledit signal d'informations est enregistré dans une bande de garde disposée sur ladite piste entre ladite première partie et ladite deuxième partie.

8. Appareil selon l'une quelconque des revendications 1 à 7,
caractérisé par
des moyens formant générateur d'informations (8) pour produire ledit signal d'informations ;
des moyens de commutation (3) pour délivrer ledit signal audio PCM, ledit signal vidéo et ledit signal d'informations, de façon divisée dans le temps, à ladite tête rotative (10) ; et
des moyens de commande de commutation (8) pour commander lesdits moyens de commutation pour délivrer ledit signal d'informations à ladite tête rotative (10) de sorte que ladite tête rotative (10) est opérationnelle pour enregistrer ledit signal d'informations dans ladite troisième partie de ladite piste hélicoïdale.

9. Appareil selon la revendication 8, dans lequel lesdits moyens de commande de commutation (8) sont opérationnels pour délivrer ledit signal d'informations à ladite tête rotative (10) pour l'enregistrer dans une zone de bande de garde entre ladite première partie et ladite deuxième partie de ladite piste hélicoïdale.

10. Appareil selon la revendication 8, dans lequel lesdits moyens de commande de commutation (8) sont opérationnels pour commander lesdits moyens de commutation (3) pour délivrer ledit signal d'informations avec un signal d'en-tête à ladite tête rotative (10) pour les enregistrer sur une première pluralité de pistes hélicoïdales formées sur ladite bande magnétique (2) et sont opérationnels, de plus, pour délivrer des signaux de code temporel contenant des informations d'identification et d'image et des signaux d'heure d'enregistrement indiquant seulement l'heure du jour d'enregistrement avec des signaux d'en-tête correspondants en tant que signaux d'informations supplémentaires pour les enregistrer respectivement dans des deuxièmes et troisièmes pluralités de pistes hélicoïdales formées sur ladite bande magnétique (2).

11. Appareil selon la revendication 10, dans lequel lesdits moyens de commande de commutation (8) sont opérationnels pour enregistrer un signal de marquage de début et un signal de marquage de fin indiquant respectivement des positions de début et de fin dudit signal d'informations et desdits signaux d'informations supplémentaires sur chacune des premières, deuxièmes et troisièmes pluralités de pistes hélicoïdales.

12. Appareil selon la revendication 10 ou 11, dans lequel lesdits moyens de commande de commutation (8) sont opérationnels pour délivrer ledit signal d'informations et lesdits signaux d'informations supplémentaires à ladite tête rotative 10 de sorte que l'on enregistre lesdits signaux de code temporel sur des groupes de pistes hélicoïdales adjacentes sur ladite bande magnétique (2), chaque groupe de pistes hélicoïdales adjacentes étant séparé par un nombre prédéterminé d'autres pistes hélicoïdales formées sur ladite bande magnétique (2).

13. Appareil selon la revendication 8, dans lequel lesdits moyens de commande de commutation (8) sont opérationnels pour commander lesdits moyens de commutation (3) pour délivrer ledit signal vidéo à ladite tête rotative (10) pour l'enregistrer sur une pluralité de pistes hélicoïdales séquentielles sur ladite bande magnétique (2) et pour délivrer des signaux de date d'enregistrement dans des pistes sélectionnées de ladite pluralité de pistes hélicoïdales séquentielles de sorte que lesdites pistes sélectionnées sont espacées les unes des autres par des intervalles d'un nombre impair de pistes.

14. Appareil selon la revendication 13, dans lequel lesdits moyens de commande de commutation (8) sont opérationnels pour commander lesdits moyens de commutation (3) pour délivrer des signaux d'heure d'enregistrement et de code temporel à ladite tête rotative (10) pour les enregistrer dans des pistes respectives de ladite pluralité de pistes hélicoïdales séquentielles autres que lesdites pistes sélectionnées de ladite pluralité de pistes hélicoïdales séquentielles.

15. Appareil selon la revendication 14, dans lequel lesdits moyens de commande (8) sont opérationnels pour commander lesdits moyens de commutation (3) pour délivrer lesdits signaux d'heure d'enregistrement à ladite tête rotative (10) de sorte que lesdits signaux d'heure d'enregistrement sont enregistrés dans des pistes supplémentaires sélectionnées de ladite pluralité de pistes hélicoïdales séquentielles de sorte que lesdites pistes sélectionnées supplémentaires sont espacées les unes des autres par des intervalles d'un nombre impair de pistes, deux desdites pistes sélectionnées des pistes enregistrant lesdits signaux de date d'enregistrement étant agencées avec deux desdites pistes sélectionnées supplémentaires des pistes enregistrant lesdits signaux d'heure d'enregistrement en groupes de quatre pistes séquentielles.

16. Appareil selon la revendication 15, dans lequel chaque groupe de quatre pistes séquentielles est séparé d'un groupe suivant par quatre pistes enregistrant lesdits signaux de code temporel.

17. Appareil selon l'une quelconque des revendications 8 à 16, dans lequel lesdits moyens de commande de commutation (8) sont opérationnels pour commander lesdits moyens de commutation (3) pour délivrer ledit signal vidéo à ladite tête rotative (10) pour enregistrer ledit signal vidéo dans ladite première partie de ladite piste hélicoïdale.
